# EUROPEAN PATENT APPLICATION

(11) **EP 3 197 083 A1**
(43) Date of publication of application: **26.07.2017**
(21) Application number: 15841930.9
(22) Date of filing: 07.04.2015
(51) Int. Cl.: H04L 1/16

(54) **METHOD AND DEVICE FOR SENDING PENDING BLOCK, AND COMPUTER READABLE STORAGE MEDIUM**

(30) Priority: 17.09.2014 CN 201410474830
(71) Applicant: ZTE Corporation, Shenzhen, Guangdong 518057 (CN)
(72) Inventor: MEI, Jianxin, Shenzhen Guangdong 518057 (CN)
(74) Representative: Lavoix
(86) International application number: PCT/CN2015/075975
(87) International publication number: WO 2016/041337

(57) **Abstract**

Disclosed are a method and device for sending a pending block, and a computer readable storage medium. The method for sending a pending block according to an embodiment of the present invention comprises: when no effective block or retransmitted block is to be sent on a network side, determining whether to instruct a terminal to send a response message; if yes, sending to the terminal a pending block that carries information instructing the terminal to respond; and if not, sending no pending block to the terminal. By means of the method and device for sending a pending block, and the computer readable storage medium provided by the embodiments of the present invention, air-interface block resources can be saved.

## Description

### TECHNICAL FIELD

The present disclosure relates to the field of a Global System for Mobile Communication (GSM), and in particular to a method and device for sending a pending block, and a computer-readable storage medium.

### BACKGROUND

The GSM is a communication system most widely used in the world, with the most users. A great amount of mobile data traffic is still born relying on technology of a General Packet Radio Service (GPRS) / Enhanced Data Rate for GSM Evolution (EGPRS) of the GSM. A Base Station Controller (BSC) of the GSM distributes data of different users to respective mobile terminals by scheduling block resource allocation on a radio channel. With a reasonable scheme for scheduling a radio block resource, data may be transmitted within a network more effectively, while saving a bandwidth resource for radio transmission.

At present, a data block of a GPRS/EGPRS service of the GSM scheduled to be sent at an air interface is a Radio Link Control (RLC) block. There are three types of RLC blocks as follows.

An effective block is an RLC data block bearing (actual) service data. A BSC will keep sending new effective blocks until all service data of the BSC are sent.

A to-be-retransmitted block is an effective block to be retransmitted after failing to be sent. A to-be-retransmitted block is to be sent at a priority higher than those of an effective block and a pending block.

A pending block is a sent effective block that is to be sent again or repeatedly when the BSC receives no timely response, therefore has no knowledge of a state of block reception by a terminal, and has no further effective block to send.

When a block of any of the three types is sent to a mobile terminal, a receiving state of the terminal may be acquired by informing the mobile terminal to return a response message.

Sending of a to-be-retransmitted block, an effective block, and a pending block in a GPRS/EGPRS service flow may be prioritized according to natures of the three types of RLC blocks. When no effective block or to-be-retransmitted block is to be sent at an air interface of the GSM, a BSC at a network side will select to schedule pending block sending repeatedly. A pending block is an effective block sent repeatedly. This may improve, to some extent, reliability in sending the effective block. However, this may also take more block resources of the air interface.

With rapid development of future 3rd-Generation (3G) / 4th-Generation (4G) mobile communication, there are growing demands of a Universal Mobile Telecommunications System (UMTS) for bandwidth resources of GSM U900M, and of Long Term Evolution (LTE) for bandwidth resources of GSM DCS1800M. As more GSM frequency band resources are being taken by a 3G/4G system, same amount of mobile data traffic has to be born on less bandwidth resources in a future GSM. Therefore, there is a need to optimize a method for block resource scheduling at an air interface for a GSM packet data service to save a transmission bandwidth.

### SUMMARY

In view of this, embodiments herein provide a method and device for sending a pending block, and a computer-readable storage medium, capable of reducing occupied block resources of an air interface.

According to an embodiment herein, a method for sending a pending block applies to a Global System for Mobile Communication, abbreviated as GSM, data service. The method includes:
when no effective block or to-be-retransmitted block is to be sent at a network side, determining whether to inform a terminal to return a response message;
in response to determining to inform the terminal to return the response message, sending the terminal a pending block bearing information instructing the terminal to respond; and
in response to determining not to inform the terminal to return the response message, sending no pending block to the terminal.

The method may further include:
determining whether a response message returned by the terminal meets a pre-set sending condition;
in response to determining that the response message returned by the terminal does not meet the pre-set sending condition, sending the terminal a pending block bearing no information instructing the terminal to respond; and
in response to determining that the response message returned by the terminal meets the pre-set sending condition, sending the terminal no pending block bearing no information instructing the terminal to respond.

The pre-set sending condition may include that: the response message returned by the terminal indicates that an effective block previously sent has been received successfully by the terminal.

The method may further include: when no effective block or to-be-retransmitted block is to be sent at the network side, before the sending the pending block bearing the information instructing the terminal to respond, sending the terminal a pending block bearing no information instructing the terminal to respond, or sending the terminal no pending block bearing no information instructing the terminal to respond.

The pending block bearing no information instructing the terminal to respond may be sent to the terminal by:
before receiving a next response message, finishing to-be-retransmitted block sending and effective block sending, and then sending the terminal the pending block bearing no information instructing the terminal to respond.

The sending the terminal no pending block bearing no information instructing the terminal to respond may include:
before receiving the next response message, sending the terminal no pending block bearing no information instructing the terminal to respond.

According to an embodiment herein, a device for sending a pending block applies to a Global System for Mobile Communication, abbreviated as GSM, data service. The device includes a first determining module and a sending module.

The first determining module may be arranged for: when no effective block or to-be-retransmitted block is to be sent at a network side, determining whether to inform a terminal to return a response message.

The sending module may be arranged for: in response to determining, by the first determining module, to inform the terminal to return the response message, sending the terminal a pending block bearing information instructing the terminal to respond; and in response to determining, by the first determining module, not to inform the terminal to return the response message, sending no pending block to the terminal.

The device may further include a second determining module.

The second determining module may be arranged for determining whether a response message returned by the terminal meets a pre-set sending condition.

The sending module may be further arranged for: in response to determining, by the second determining module, that the response message returned by the terminal does not meet the pre-set sending condition, sending the terminal a pending block bearing no information instructing the terminal to respond; and in response to determining, by the second determining module, that the response message returned by the terminal meets the pre-set sending condition, sending the terminal no pending block bearing no information instructing the terminal to respond.

The pre-set sending condition may include that: the response message returned by the terminal indicates that an effective block previously sent has been received successfully by the terminal.

The sending module may be further arranged for: when no effective block or to-be-retransmitted block is to be sent at the network side, before sending the pending block bearing the information instructing the terminal to respond, sending the terminal a pending block bearing no information instructing the terminal to respond, or sending the terminal no pending block bearing no information instructing the terminal to respond.

The sending module may be further arranged for: in response to determining, by the second determining module, that the response message returned by the terminal does not meet the pre-set sending condition, before receiving a next response message, finishing to-be-retransmitted block sending and effective block sending, and then sending the terminal the pending block bearing no information instructing the terminal to respond.

The sending module may be further arranged for: in response to determining, by the second determining module, that the response message returned by the terminal meets the pre-set sending condition, before receiving the next response message, sending the terminal no pending block bearing no information instructing the terminal to respond.

According to the method and device for sending a pending block and the computer-readable storage medium according to at least one embodiment herein, by conditional pending block sending, a specific pending block is sent only under a specific condition. For example, a pending block bearing information instructing a terminal to respond is sent to the terminal only when such notification is needed. Otherwise no pending block whatsoever is sent, reducing a number of pending blocks sent at an air interface, saving channel resources at the air interface, saving bandwidth resources for radio transmission, and thereby saving block resources of the air interface. A GSM network may accommodate traffic of a volume similar to that in an existing network on less frequency resources.

### BRIEF DESCRIPTION OF THE DRAWINGS

Fig.1 is a flowchart of a method for sending a pending block according to an Embodiment 1 herein.
Fig.2 is a flowchart of another method for sending a pending block according to an Embodiment 1 herein.
Fig.3 is a flowchart of radio block resource scheduling on a link of an air interface according to an Embodiment 1 herein.
Fig.4 is a diagram of information exchange between a terminal and a network side according to an Embodiment 1 herein.
Fig.5 is another flowchart of radio block resource scheduling on a link of an air interface according to an Embodiment 1 herein.
Fig.6 is another diagram of information exchange between a terminal and a network side according to an Embodiment 1 herein.
Fig.7 is a diagram of a structure of a device for sending a pending block according to an Embodiment 2 herein.
Fig.8 is a diagram of a structure of another device for sending a pending block according to an Embodiment 2 herein.

### DETAILED DESCRIPTION

Embodiments herein will be elaborated below with reference to the drawings for better understanding of features and technical content of embodiments herein. The drawings are merely for purpose of illustration and are not intended to limit embodiments herein.

### Embodiment 1

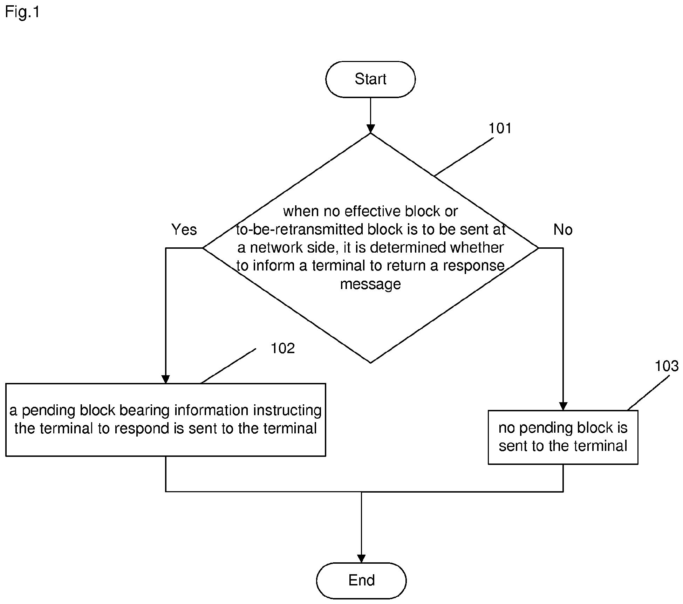

Given that lots of block resources of an air interface are taken with an existing method for sending a pending block, the embodiment provides a method for sending a pending block that requires no change in an existing GSM agreement, which reduces a number of pending blocks sent mainly by conditional pending block sending, to save a bandwidth resource for radio transmission and a channel resource of the air interface, thereby saving block resources of the air interface. As shown in Fig.1, the method for sending a pending block according to the embodiment applies to a GSM data service, and includes steps as follows.

In step 101, when no effective block or to-be-retransmitted block is to be sent at a network side, it is determined whether to inform a terminal to return a response message. If so, the flow goes to step 102. Otherwise the flow goes to step 103.

Before the step, the network side may generally send an effective block or a to-be-retransmitted block. Pending block sending may be started to improve reliability of an effective block only when no effective block or to-be-retransmitted block is to be sent.

In step 102, a pending block bearing information instructing the terminal to respond is sent to the terminal.

The pending block sent in the step may bear the information instructing the terminal to respond. The pending block sent in the step is used for instructing the terminal to return a response message in addition to resending a sent effective block.

There are two types of pending blocks in the embodiment. One is a pending block bearing information instructing the terminal to respond. The other is a pending block bearing no information instructing the terminal to respond. According to the embodiment, the pending block bearing the information instructing the terminal to respond is used for resending a sent effective block and bears the information that instructs the terminal to return a response. According to the embodiment, the pending block bearing no information instructing the terminal to respond is used for resending a sent effective block. That is, the network side may resend or repeatedly send a sent effective block under a certain condition, such as when no to-be-retransmitted block or effective block is to be sent, when the network side receives no timely response from the terminal and has no knowledge of a state of block reception (such as whether the sent effective block is received successfully) by the terminal. Such a block may be referred to as a pending block.

With the method according to the embodiment, to inform the terminal to return a response message, the network side may send the terminal a pending block bearing information instructing the terminal to respond. The terminal may receive the pending block. The terminal may return a response message according to the instructing information to inform the network of a receiving state of the terminal.

In step 103, no pending block is sent to the terminal.

With the method according to the embodiment, when it is determined unnecessary to inform the terminal to respond, no pending block whatsoever is sent to the terminal, thereby saving a bandwidth resource for radio transmission.

With the method according to the embodiment, a number of pending blocks sent is reduced by conditional pending block sending. A specific pending block is sent only under a specific condition. For example, a pending block bearing information instructing a terminal to respond is sent to the terminal only when such notification is needed. Otherwise no pending block whatsoever is sent, reducing a number of ineffective pending block sending operations on a radio channel, reducing a total number of pending blocks sent at an air interface, thereby reducing occupation of bandwidth resources for radio transmission, saving channel resources, and thereby saving block resources of the air interface.

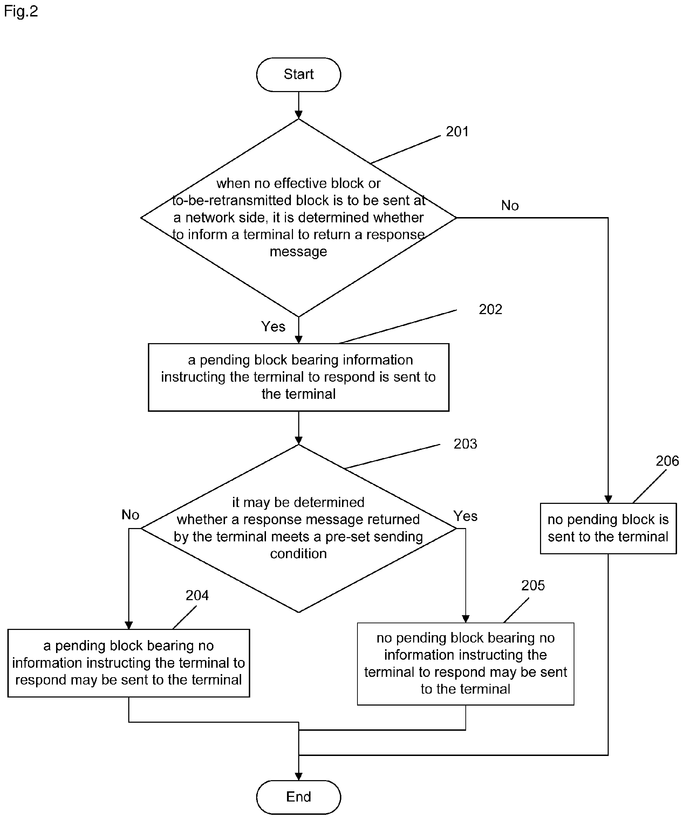

After the terminal returns a response message, the network side may have to send a pending block bearing no information instructing the terminal to respond, that is, a pending block purely for resending a sent effective block. To improve practicality, the method according to the embodiment may further include steps as follows. It may be determined whether a response message returned by the terminal meets a pre-set sending condition. If the response message returned by the terminal does not meet the pre-set sending condition, a pending block bearing no information instructing the terminal to respond may be sent to the terminal. Otherwise if the response message returned by the terminal meets the pre-set sending condition, no pending block bearing no information instructing the terminal to respond has to be sent to the terminal. As shown in Fig.2, a method according to the embodiment may include steps as follows.

In step 201, when no effective block or to-be-retransmitted block is to be sent at a network side, it is determined whether to inform a terminal to return a response message. If so, step 202 is executed. Otherwise step 206 is executed.

A pending block sending policy according to the embodiment may apply when no effective block or to-be-retransmitted block is to be sent at the network side.

In step 202, a pending block bearing information instructing the terminal to respond is sent to the terminal.

In step 203, it may further be determined whether a response message returned by the terminal meets a pre-set sending condition. If the pre-set sending condition is not met, step 204 is executed. Otherwise if the pre-set sending condition is met, step 205 is executed.

With the method according to the embodiment, it may be determined whether to continue to send a pending block according to the response message returned by the terminal.

The pre-set sending condition according to the embodiment may include that: the response message returned by the terminal indicates that an effective block previously sent has been received successfully by the terminal.

That is to say, when the response message shows that any effective block previously sent by the network side has been received by the terminal successfully, i.e., completely correctly, no pending block will have to be sent to the terminal.

When the response message shows that an effective block previously sent by the network side is not received by the terminal successfully, a pending block will continue to be sent to the terminal.

In step 204, a pending block bearing no information instructing the terminal to respond may be sent to the terminal.

The step may include that: before a next response message is received, any to-be-retransmitted block sending and effective block sending may be performed, and then the pending block bearing no information instructing the terminal to respond may keep being sent to the terminal.

That is to say, when the response message shows that an effective block previously sent by the network side is not received by the terminal completely correctly, any to-be-retransmitted block sending and effective block sending may be performed first, and after the to-be-retransmitted block sending and the effective block sending complete, the pending block bearing no information instructing the terminal to respond may keep being sent. The pending block sending policy may last until the network side receives the next response message.

In step 205, no pending block bearing no information instructing the terminal to respond may be sent to the terminal.

The step may include that: before a next response message is received, no pending block bearing no information instructing the terminal to respond may be sent to the terminal.

In step 206, no pending block is sent to the terminal.

With the method shown in Fig.2, occupation of bandwidth resources for radio transmission is reduced, saving channel resources, and thereby saving block resources of the air interface. In an actual application, the number of pending blocks sent at the air interface may be reduced by 50%-80%, saving about 20%-30% of the channel resources of the air interface. With the method according to the embodiment, a GSM network may accommodate traffic of a volume similar to that in an existing network on less frequency resources. Saved frequency band resources may be used by a future 3/4G network. With the method according to the embodiment, power of an apparatus at the network side for sending at the air interface may be reduced, with reduced intra-network radio interference.

The method may further include that: when no effective block or to-be-retransmitted block is to be sent at the network side, before the pending block bearing the information instructing the terminal to respond is sent, a pending block bearing no information instructing the terminal to respond may or may not be sent to the terminal. That is, it may be determined, at a first opportunity for sending a pending block, whether to send the terminal a pending block bearing no information instructing the terminal to respond.

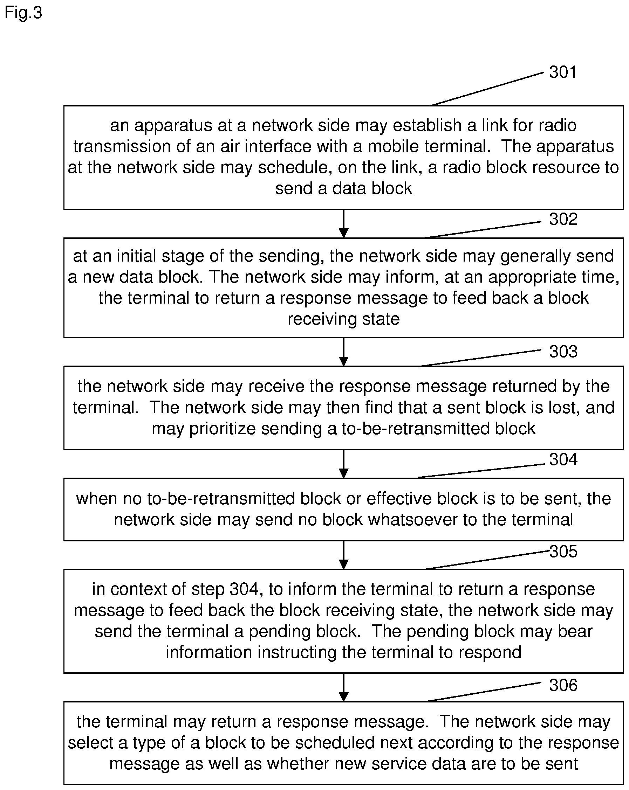

It is illustrated below how to apply the method according to the embodiment to radio block resource scheduling on a link of an air interface. Fig.3 shows a flow of radio block resource scheduling on a link of an air interface.

In step 301, an apparatus at a network side may establish a link for radio transmission at an air interface with a mobile terminal. The apparatus at the network side may schedule, on the link, a radio block resource to send a data block.

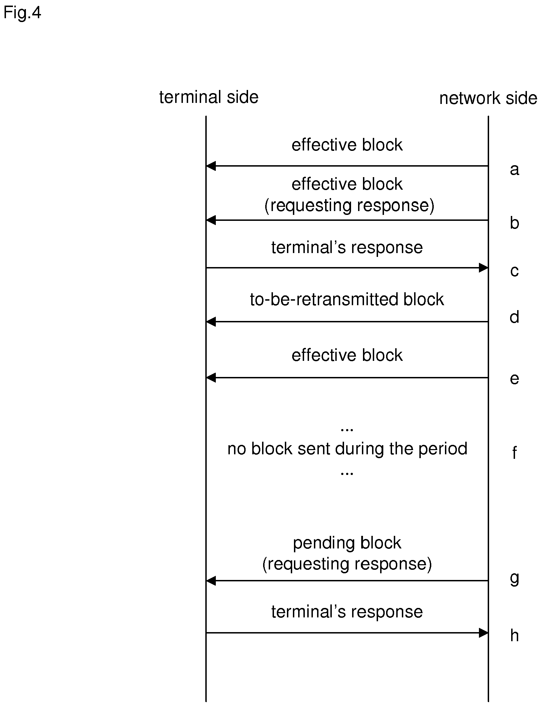

In step 302, at an initial stage of the sending, the network side may generally send a new data block. The network side may inform, at an appropriate time, the terminal to return a response message to feed back a block receiving state. Refer to a, b, and c in Fig.4.

In step 303, the network side may receive the response message returned by the terminal. The network side may then find that a sent block is lost, and may prioritize sending a to-be-retransmitted block, as shown by d in Fig.4. If the to-be-retransmitted block sending completes or no to-be-retransmitted block is to be sent, any remaining effective block will continue to be sent, as shown by e in Fig.4.

In step 304, when no to-be-retransmitted block or effective block is to be sent, the network side may send no block whatsoever to the terminal.

In step 305, in context of step 304, to inform the terminal to return a response message to feed back the block receiving state, the network side may send the terminal a pending block. The pending block may bear information instructing the terminal to respond, as shown by g in Fig.4.

The pending block sent in step 305 may bear the information instructing the terminal to respond.

In steps 304-305, when no to-be-retransmitted block or effective block is to be sent, to inform the terminal to return a response message to feed back the block receiving state, the network side may send the terminal a pending block bearing information instructing the terminal to respond. Otherwise if it is not required to inform the terminal to respond, no pending block whatsoever may have to be sent.

In step 306, the terminal may return a response message. The network side may select a type of a block to be scheduled next according to the response message as well as whether new service data are to be sent, as shown by h in Fig.4.

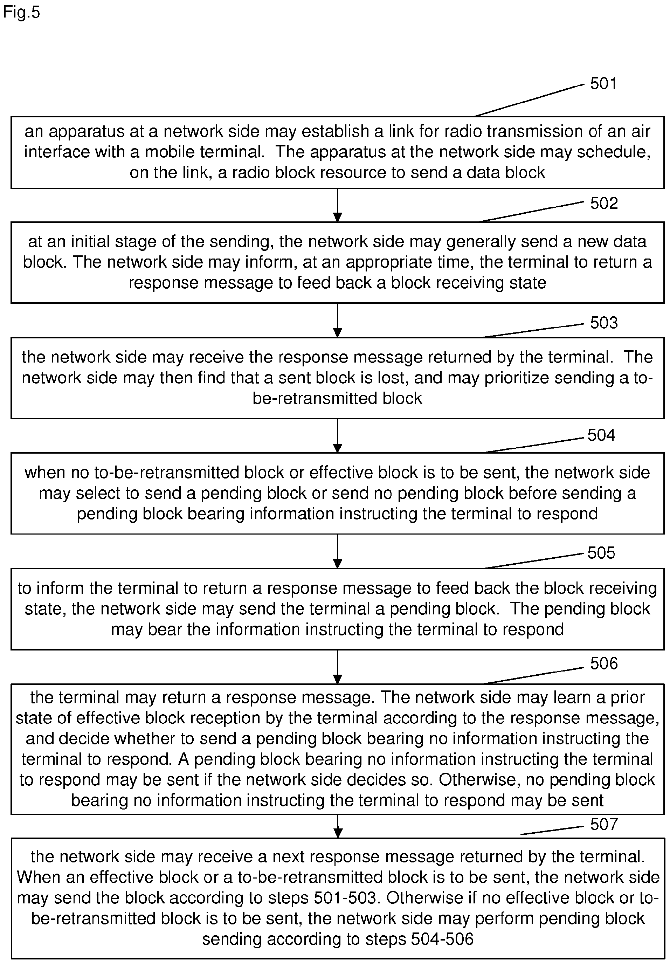

Fig.5 shows another flow of radio block resource scheduling on a link of an air interface.

In step 501, an apparatus at a network side may establish a link for radio transmission at an air interface with a mobile terminal. The apparatus at the network side may schedule, on the link, a radio block resource to send a data block.

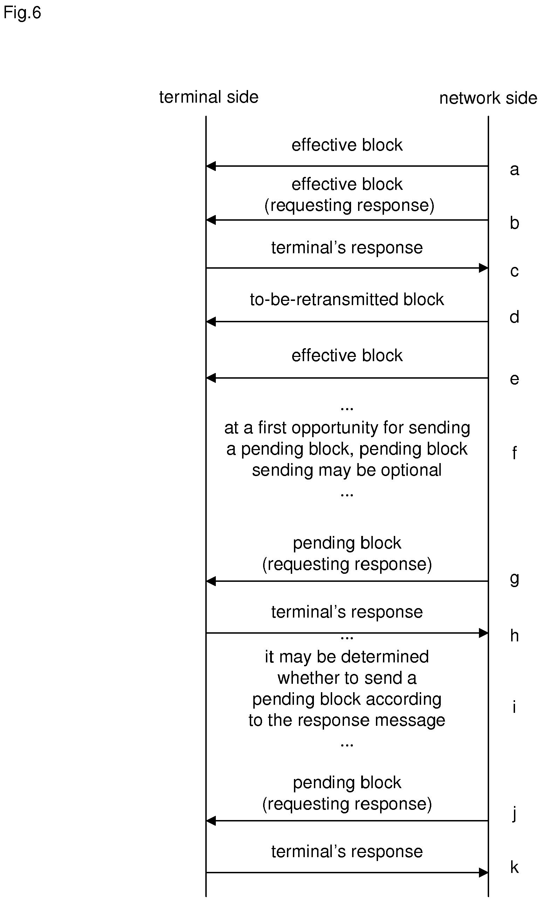

In step 502, at an initial stage of the sending, the network side may generally send a new data block. The network side may inform, at an appropriate time, the terminal to return a response message to feed back a block receiving state. Refer to a, b, and c in Fig.6.

In step 503, the network side may receive the response message returned by the terminal. The network side may then find that a sent block is lost, and may prioritize sending a to-be-retransmitted block, as shown by d in Fig.6. If the to-be-retransmitted block sending completes or no to-be-retransmitted block is to be sent, any remaining effective block will continue to be sent, as shown by e in Fig.4.

In step 504, when no to-be-retransmitted block or effective block is to be sent, the network side may select to send a pending block or send no pending block before sending a pending block bearing information instructing the terminal to respond.

A pending block sent in step 504 may bear no information instructing the terminal to respond and be used only for resending a sent effective block.

Step 504 may provide a first opportunity for pending block sending by the network side. There may be two options. At the first opportunity, a pending block may or may not be sent, by default, as shown in f in Fig.6.

In step 505, to inform the terminal to return a response message to feed back the block receiving state, the network side may send the terminal a pending block. The pending block may bear the information instructing the terminal to respond, as shown by g in Fig.6.

The pending block sent in step 505 may bear the information instructing the terminal to respond.

In step 506, the terminal may return a response message. The network side may learn a prior state of effective block reception by the terminal according to the response message, and decide whether to send a pending block bearing no information instructing the terminal to respond. A pending block bearing no information instructing the terminal to respond may be sent if the network side so decides. Otherwise, no pending block bearing no information instructing the terminal to respond may have to be sent.

In the step, it may be decided whether and how to send a pending block as follows (as shown by h in Fig.6).

When the response shows that any effective block previously sent has been received completely correctly, no pending block bearing no information instructing the terminal to respond will have to be sent (except for when it is required to instruct the terminal to respond, as set in step 505, as shown by joint j in Fig.6). The pending block sending policy may last until the network side receives the next response message.

When the response shows that an effective block previously sent is not received completely correctly and has to be retransmitted, then after to-be-retransmitted block sending and effective block sending complete, pending block sending may continue without indicating the terminal to respond. The pending block sending policy may last until the network side receives the next response message.

In step 507, the network side may receive a next response message returned by the terminal. When an effective block or a to-be-retransmitted block is to be sent, the network side may send the block according to steps 501-503. Otherwise if no effective block or to-be-retransmitted block is to be sent, the network side may perform pending block sending according to steps 504-506, as shown by joint k in Fig.6.

With the method according to the embodiment, a number of ineffective pending block sending operations on a radio channel may be reduced, saving channel resources, reducing power for sending at the air interface, reducing intra-network radio interference.

An embodiment herein also provides a computer-readable storage medium. The computer-readable storage medium stores therein computer-executable instructions. The computer-executable instructions are for executing an aforementioned method.

With the method and device for sending a pending block and the computer-readable storage medium according to at least one embodiment herein, by conditional pending block sending, a specific pending block is sent only under a specific condition. For example, a pending block bearing information instructing a terminal to respond is sent to the terminal only when such notification is needed. Otherwise no pending block whatsoever is sent, reducing a number of pending blocks sent at an air interface, saving channel resources at the air interface, saving bandwidth resources for radio transmission, and thereby saving block resources of the air interface. A GSM network may accommodate traffic of a volume similar to that in an existing network on less frequency resources.

In addition, frequency band resources saved according to an embodiment herein may be used by a future 3/4G network, facilitating development of the3/4G network. With the method according to an embodiment herein, the number of pending blocks sent at the air interface may be reduced, power of an apparatus at the network side for sending at the air interface may be reduced, reducing intra-network radio interference.

### Embodiment 2

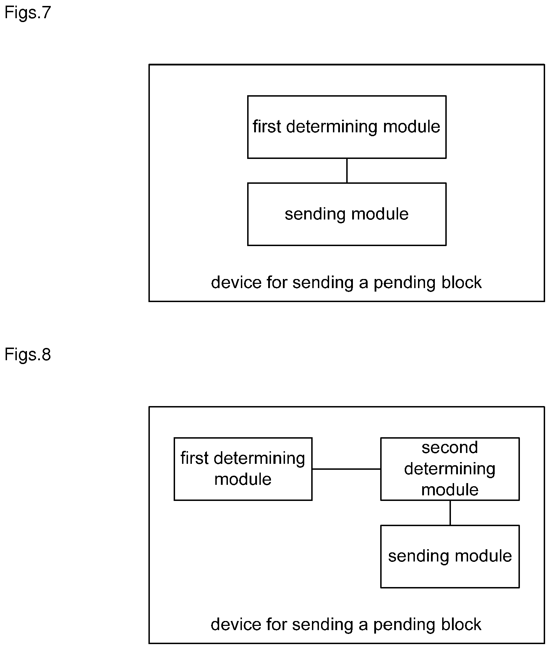

As shown in Fig.7, an embodiment herein provides a device for sending a pending block. The device applies to a GSM data service. The device includes a first determining module and a sending module.

The first determining module is arranged for: when no effective block or to-be-retransmitted block is to be sent at a network side, determining whether to inform a terminal to return a response message.

The sending module is arranged for: in response to determining, by the first determining module, to inform the terminal to return the response message, sending the terminal a pending block bearing information instructing the terminal to respond; and in response to determining, by the first determining module, not to inform the terminal to return the response message, sending no pending block to the terminal.

With the device according to the embodiment, by conditional pending block sending, a specific pending block is sent only under a specific condition. For example, a pending block bearing information instructing a terminal to respond is sent only when such notification is needed. Otherwise no pending block whatsoever is sent, reducing a number of ineffective pending block sending operations on a radio channel, reducing a total number of pending blocks sent at an air interface, reducing occupation of bandwidth resources for radio transmission, saving channel resources, and thereby saving block resources of the air interface.

As shown in Fig.8, the device according to the embodiment may further include a second determining module.

The second determining module may be arranged for: further determining whether a response message returned by the terminal meets a pre-set sending condition.

The sending module may be further arranged for: in response to determining, by the second determining module, that the response message returned by the terminal does not meet the pre-set sending condition, sending the terminal a pending block bearing no information instructing the terminal to respond; and in response to determining, by the second determining module, that the response message returned by the terminal meets the pre-set sending condition, sending the terminal no pending block bearing no information instructing the terminal to respond.

With the device according to the embodiment, a GSM network may accommodate traffic of a volume similar to that in an existing network on less frequency resources. Saved frequency band resources may be used by a future 3/4G network. With the device according to the embodiment, power of an apparatus at the network side for sending at the air interface may be reduced, with reduced intra-network radio interference.

The pre-set sending condition may include that: the response message returned by the terminal indicates that an effective block previously sent has been received successfully by the terminal.

The sending module may be further arranged for: when no effective block or to-be-retransmitted block is to be sent at the network side, before sending the pending block bearing the information instructing the terminal to respond, sending the terminal a pending block bearing no information instructing the terminal to respond, or sending the terminal no pending block bearing no information instructing the terminal to respond.

The sending module may be further arranged for: in response to determining, by the second determining module, that the response message returned by the terminal does not meet the pre-set sending condition, before receiving a next response message, finishing to-be-retransmitted block sending and effective block sending, and then sending the terminal the pending block bearing no information instructing the terminal to respond.

The sending module may be further arranged for: in response to determining, by the second determining module, that the response message returned by the terminal meets the pre-set sending condition, before receiving the next response message, sending the terminal no pending block bearing no information instructing the terminal to respond.

Those skilled in the art should understand that functions implemented by each module in the device for sending a pending block according to an embodiment herein may be understood with reference to related description of the method according to an embodiment herein. Each module in the device for sending a pending block according to an embodiment herein may be implemented by an analog circuit implementing function according to an embodiment herein, or by running, on a smart terminal, software executing function according to an embodiment herein.

In an actual application, each of the first determining module, the sending module and the second determining module may be implemented by a Central Processing Unit (CPU), a Digital Signal Processor (DSP), or a Field Programmable Gate Array (FPGA) in a device for sending a pending block herein. The CPU, the DSP, and the FPGA may all be built in the device for sending a pending block.

Those skilled in the art will know that an embodiment herein may provide a method, system, or computer program product. Therefore, an embodiment herein may take on a form of hardware, software, or a combination thereof. In addition, an embodiment herein may take on a form of a computer program product implemented on one or more computer available storage media (including but not limited to, magnetic disk memory, optic memory, and the like) containing computer available program codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a transitory or non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

What described are merely embodiments herein. Note that various modifications and variations may be devised by those skilled in the art without departing from the principle of embodiments herein. Such modifications and variations should be deemed to fall into the scope of embodiments herein.

### Industrial Applicability

According to at least one embodiment herein, by conditional pending block sending, a specific pending block is sent only under a specific condition. For example, a pending block bearing information instructing a terminal to respond is sent to the terminal only when such notification is needed. Otherwise no pending block whatsoever is sent, reducing a number of pending blocks sent at an air interface, saving channel resources at the air interface, saving bandwidth resources for radio transmission, and thereby saving block resources of the air interface. A GSM network may accommodate traffic of a volume similar to that in an existing network on less frequency resources.

## Claims

1. A method for sending a pending block, applying to a Global System for Mobile Communication, abbreviated as GSM, data service, **characterised in that** the method comprises:
when no effective block or to-be-retransmitted block is to be sent at a network side, determining whether to inform a terminal to return a response message;
in response to determining to inform the terminal to return the response message, sending the terminal a pending block bearing information instructing the terminal to respond; and
in response to determining not to inform the terminal to return the response message, sending no pending block to the terminal.

2. The method according to claim 1, further comprising:
determining whether a response message returned by the terminal meets a pre-set sending condition;
in response to determining that the response message returned by the terminal does not meet the pre-set sending condition, sending the terminal a pending block bearing no information instructing the terminal to respond; and
in response to determining that the response message returned by the terminal meets the pre-set sending condition, sending the terminal no pending block bearing no information instructing the terminal to respond.

3. The method according to claim 2, wherein the pre-set sending condition comprises that: the response message returned by the terminal indicates that an effective block previously sent has been received successfully by the terminal.

4. The method according to claim 1, further comprising: when no effective block or to-be-retransmitted block is to be sent at the network side, before the sending the pending block bearing the information instructing the terminal to respond,
sending the terminal a pending block bearing no information instructing the terminal to respond, or sending the terminal no pending block bearing no information instructing the terminal to respond.

5. The method according to claim 2 or 3, wherein the sending the terminal the pending block bearing no information instructing the terminal to respond comprises:
before receiving a next response message, finishing to-be-retransmitted block sending and effective block sending, and then sending the terminal the pending block bearing no information instructing the terminal to respond; and
wherein the sending the terminal no pending block bearing no information instructing the terminal to respond comprises:
before receiving the next response message, sending the terminal no pending block bearing no information instructing the terminal to respond.

6. A device for sending a pending block, applying to a Global System for Mobile Communication, abbreviated as GSM, data service, **characterised in that** the device comprises a first determining module and a sending module,
wherein the first determining module is arranged for: when no effective block or to-be-retransmitted block is to be sent at a network side, determining whether to inform a terminal to return a response message,
wherein the sending module is arranged for: in response to determining, by the first determining module, to inform the terminal to return the response message, sending the terminal a pending block bearing information instructing the terminal to respond; and in response to determining, by the first determining module, not to inform the terminal to return the response message, sending no pending block to the terminal.

7. The device according to claim 6, further comprising a second determining module arranged for determining whether a response message returned by the terminal meets a pre-set sending condition,
wherein the sending module is further arranged for:
in response to determining, by the second determining module, that the response message returned by the terminal does not meet the pre-set sending condition, sending the terminal a pending block bearing no information instructing the terminal to respond; and in response to determining, by the second determining module, that the response message returned by the terminal meets the pre-set sending condition, sending the terminal no pending block bearing no information instructing the terminal to respond.

8. The device according to claim 7, wherein the pre-set sending condition comprises that: the response message returned by the terminal indicates that an effective block previously sent has been received successfully by the terminal.

9. The device according to claim 6, wherein the sending module is further arranged for: when no effective block or to-be-retransmitted block is to be sent at the network side, before sending the pending block bearing the information instructing the terminal to respond, sending the terminal a pending block bearing no information instructing the terminal to respond, or sending the terminal no pending block bearing no information instructing the terminal to respond.

10. The device according to claim 7 or 8, wherein the sending module is further arranged for:
in response to determining, by the second determining module, that the response message returned by the terminal does not meet the pre-set sending condition, before receiving a next response message, finishing to-be-retransmitted block sending and effective block sending, and then sending the terminal the pending block bearing no information instructing the terminal to respond; and
in response to determining, by the second determining module, that the response message returned by the terminal meets the pre-set sending condition, before receiving the next response message, sending the terminal no pending block bearing no information instructing the terminal to respond.

11. A computer-readable storage medium, storing therein computer-executable instructions for executing the method according to any one of claims 1-5.
